# EUROPEAN PATENT APPLICATION

(11) **EP 4 733 607 A1**
(43) Date of publication of application: **29.04.2026**
(21) Application number: 24208365.7
(22) Date of filing: 23.10.2024
(51) Int. Cl.: F16B 21/06, F16B 21/07

(54) **FASTENING ELEMENT FOR FASTENING A FIRST VEHICLE BODY COMPONENT TO A SECOND VEHICLE BODY COMPONENT**

(71) Applicant: Newfrey LLC, New Britain, CT 06053 (US)
(72) Inventor: Kempf, Christian, 35394 Gießen (DE); Rosemann, Frank, 35394 Gießen (DE)
(74) Representative: Haarpatent Patentanwälte Krämer Meyer

(57) **Abstract**

A fastening element (1) for fastening a first vehicle body component (20) to a second vehicle body component (23) is provided with a base body (2) comprising a plate-shaped head part (3) with latching hooks (6) projecting in the direction of the head part (3) for latching to the first vehicle body component (20). Furthermore, the base body (2) comprises a sleeve (4) which is located centrally in the base body (2) and which comprises a first opening (8) for the receptacle of a stud (22) present on the second vehicle body component (23) and a second opening (9) for the introduction of a locking element (14). The fastening element (2) also has locking fingers (11) which project into the sleeve (4), are designed to be radially resilient and are intended for a form-fitting connection to the stud (22) that can be accommodated in the sleeve (4). The locking element (14) can be brought, by an axial movement relative to the sleeve (4) in the direction of the first opening (8), into a first locking position, in which it is held in the sleeve (4) in a form-fitting manner, whereby locking arms (16) extending axially to the longitudinal axis of the sleeve (4) in the direction of the first opening (8) are present on the locking element (14) at a distance from the locking fingers (11). The locking element (14) can be moved by a further axial movement relative to the sleeve (4) into a second locking position, in which it is held in the sleeve (4) in an interlocking manner and the locking arms (16) are in active contact with the locking fingers (11), so that the locking fingers (11) can be clamped between the stud (22) and the locking arms (16).

## Description

The invention relates to a fastening element for fastening a first vehicle body component to a second vehicle body component, having a base body which comprises a plate-shaped head part and latching hooks projecting in the direction of the head part for latching with the first vehicle body component, and having a sleeve which is present centrally in the base body and comprises a first opening for receptacle of a stud present on the vehicle body component and a second opening for insertion of a locking element. The invention also relates to a fastening arrangement.

Screw connections or plug-in connections can be used to connect vehicle body components to each other.

DE 10 2010 030 964 A1 describes a fastening arrangement for fastening a first vehicle body component to a second vehicle body component, with a ball-like stud which is positively engaged by a sleeve. A cap held on the sleeve can be moved from a pre-assembly position to a defined final assembly position, thus locking the positive connection between the sleeve and stud.

DE 10 2017 125 771 B4 discloses a vehicle component fastener for fastening a first component to a second component of a vehicle. Here, a stud socket for the receptacle of a ball stud or T-bolt is connected to one another in a pre-assembly position via a pre-assembly latching device and transferred to a final assembly position by axial displacement relative to one another.

EP 1 555 176 B1 describes a positioning/fixing system comprising at least three pairs of fixing elements that engage elastically. Two of the pairs form bearings that allow a degree of rotation between one mechanical component and another, while the second element of the third pair has a projecting ball joint that engages with a receiving/ locking coupling inside an elastomer block.

The first and second pairs of fixing elements have projecting heads that engage with a slot or hole in respective plates.

DE 10 2022 129 440 A1 discloses a fastening device for fastening structural components to studs. This comprises a connecting sleeve, wherein the stud can be received and fixed in the connecting sleeve. Furthermore, a retaining cap is provided which, in a pre-assembly position, is in engagement with a counter-locking edge of the connecting sleeve, so that displacement of the retaining cap in the axial direction away from the connecting sleeve is blocked. In addition, a locking element with at least one locking lug is provided so that displacement of the retaining cap in the axial direction towards the connecting sleeve is blocked. As a result, the retaining cap is fixed in a pre-assembly position in the axial direction and arranged on the connecting sleeve so that it cannot be lost.

The disadvantages of the known devices is that they do not achieve high holding forces, are costly to manufacture and also have a height that does not cover all the applications that may arise in vehicle construction.

The object of the invention is to provide a fastening element which does not have the disadvantages of the prior art, can be preassembled in a simple manner and whose parts are not lost during transportation.

The above-mentioned object is achieved by the fastening element defined in independent claim 1. Preferred embodiments are described in the dependent claims.

A fastening element for fastening a first vehicle body component to a second vehicle body component is provided, having:
- a locking element comprising locking arms, and
- a base body which comprises
   a plate-shaped head part with latching hooks projecting in the direction of the head part adapted for latching to the first vehicle body component, and with
   a sleeve which is present in the center of the base body and which comprises a first opening adapted to be a receptacle for a stud arranged on the second vehicle body component and a second opening adapted to receive the locking element, the sleeve having radially resilient locking fingers projecting into the sleeve and which are designed to form a form-fitting connection with the stud,

wherein the locking element can be brought by an axial movement relative to the sleeve into a first locking position, in which it is held in a form-fitting manner in the sleeve and in which the locking arms are located at a distance from the locking fingers,
wherein the locking element can be moved by a further axial movement relative to the sleeve into a second locking position, in which it is held in the sleeve in a form-fitting manner and in which the locking arms are in effective contact with the locking fingers, so that the locking fingers can be clamped between the stud and locking arms. The vehicle body component is preferably a motor vehicle body component.

A significant advantage of the fastening element according to the invention is that it achieves a compact overall height due to the advantageous arrangement of the body components on the fastening element. The fastening element can be used advantageously, particularly in the underbody area in vehicle construction, where there is little space for fasteners. Another advantage is that it can be delivered pre-assembled, thus avoiding the loss of components. In a preferred embodiment, the locking element is already present in the first locking position and cannot be lost during transport, for example. Furthermore, it is advantageous that the locking fingers can still be moved in the first locking position. This allows for any positional tolerances to be compensated for when the fastening element is installed.

In a further development of the invention, it is provided that at least a first radial recess and a second radial recess spaced axially therefrom are present on the inner surface of the sleeve. The radial recesses can be designed as slots or notches. Depending on the design, two radial recesses can be arranged diametrically to each other, so that four axially spaced radial recesses in the sleeve are advantageous. If the radial recesses are designed as notches, two circumferential notches that are axially separated from each other on the inner surface of the sleeve may be sufficient. Advantageously, corresponding bead-like protrusions are present on an outer surface of the locking element corresponding to the radial recesses, which engage with the radial recesses when the locking element is in the first or second locking position. It is preferred that the locking element has at least one bead on its outer surface, which engages with the first radial recess in the first locking position and with the second radial recess in the second locking position. The locking element can be held securely in its locking positions by the bead/radial recess engagement.

In one embodiment, it is provided that two diametrically arranged and radially resilient latching elements are present on an outer surface of the locking element, which engage behind a shoulder present in the sleeve in the second locking position. The latching elements advantageously increase the holding forces of the fastening element by latching with the sleeve in the second locking position.

The locking fingers of the fastening element are designed in such a way that they can be brought into form-fitting engagement with the stud. For this purpose, the locking fingers can have a locking head at their free ends with a concave locking surface aligned radially to the central axis of the sleeve. Such concave locking finger designs are particularly advantageous for ball-shaped studs, which are frequently used in vehicle construction, and ensure strong locking.

It is preferred that the locking fingers project axially from the inner circumferential surface of the sleeve towards the central axis of the sleeve in the direction of the second opening. The preferred design of the fastening element together with the locking fingers is particularly easy to produce in one part, for example by injection molding.

The locking arms of the locking element rest against the locking fingers in their second locking position, so that the locking fingers can be clamped between the received stud and the locking arms. It has been found that this fixing of the locking fingers can be further supported if a gap, which opens in the direction of the first opening, extends between the locking finger and the inner circumferential surface of the sleeve, into which gap the locking arms of the locking element protrude in the second locking position. This allows the locking arms to be supported on the inner circumferential surface of the sleeve on the one hand and on the locking fingers on the other.

The locking arms advantageously rest against the locking fingers with a contact surface in the second locking position, whereby the contact surface is formed by an axial recess on the locking arms. This axial recess is also advantageous for the first locking position and has the effect that the locking fingers have more free movement in the first locking position and tolerances can be compensated.

To simplify disassembly of the fastening element, disassembly aids are provided on the locking head of the locking fingers, which are accessible by a disassembly tool that can be guided into the sleeve, so that a locking finger can be moved out of its engagement with the stud by applying force to the disassembly aids. The disassembly tool can be moved with its free end into the fastening element and brought into engagement with the disassembly aids. The disassembly aids can be designed as disassembly ribs, for example.

Latching hooks are present on the base body. In this respect, it is preferred that the latching hooks extend radially outwards from a lateral surface of the base body with respect to the longitudinal axis of the sleeve and in an arcuate manner in the direction of the plate-shaped head part. This allows an even more compact design of the fastening element to be achieved. The latching of the latching hooks with the first vehicle body component can be improved by the latching hooks having a latching shoulder at their free end pointing outwards towards the edge of the plate-shaped head part. A first vehicle body component can be placed on the latching shoulder and secured.

The invention further concerns a fastening arrangement having a fastening element as described and having a first vehicle body component which can be connected to a second vehicle body component, the first vehicle body component being latched with latching hooks of the fastening element, and wherein a locking element which can be brought into the sleeve in an axial movement is in its first locking position in positive engagement with the sleeve and its locking arms are arranged at a distance from the locking fingers.

It is preferred that the fastening arrangement is pre-assembled, so that the fastening element and the first body component are already joined together. In this preferred embodiment, the fastening arrangement can be transported easily and mounted without loss. A significant advantage of the fastening arrangement according to the invention is that by avoiding punched holes in a vehicle body, for example, as are usually required for conventional screw or plug-in connections, corrosion-critical points are eliminated. This also eliminates the need for the sealing measures known from the prior art. Further advantages of the fastening arrangement according to the invention are a reduction in manufacturing costs and material costs, as well as a reduction in system technology, device technology and maintenance costs. Another advantage of the fastening arrangement according to the invention is that it is suitable for retrofitting. Reference is also made to the embodiments and advantages of the fastening element, which are to be applied analogously to the fastening arrangement.

Furthermore, in one embodiment of the fastening arrangement, it is provided that a stud is arranged on the second vehicle body component, which latches with the radially resilient locking fingers projecting into the sleeve. Furthermore, in a further embodiment, it is provided that the locking element is form-fittingly held in the sleeve in its second locking position and the locking arms are in active contact with the locking fingers, so that the locking fingers are clamped between the stud and the locking arms.

The invention is explained in more detail below with reference to an embodiment of the invention, which is shown in the drawing. It shows
- Figure 1: a perspective view of a fastening element comprising a locking element and a base body,
- Figure 2: a further perspective view of the fastening element of Fig. 1,
- Figure 3: a perspective view of the locking element of Fig. 1 or Fig. 2,
- Figure 4: a sectional view of a fastening arrangement with a first vehicle body component, a second vehicle body component and the fastening element of Fig. 1, wherein the locking element is in the first locking position and
- Figure 5: a sectional view of the fastening arrangement with the fastening element.

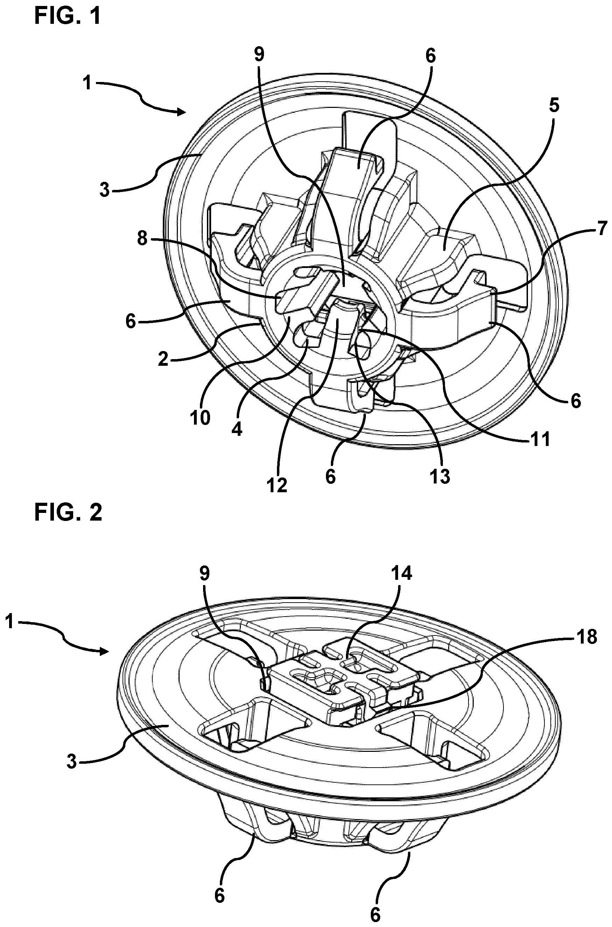

With reference to figures 1 and 2, the structure of a design of a fastening element is explained below. The fastening element 1 comprises a cylindrically shaped base body 2 with a plate-shaped head part 3 and a sleeve 4 extending centrally in the base body 2. The central axis of the base body 2 is aligned coaxially with the central axis of the sleeve 4, with the longitudinal axis of the sleeve 4 or base body 2 running coaxially with its central axis. The fastening element 1 can be formed from a plastic or a composite material. It may be provided that parts of the fastening element 1 have a reinforcement and/or reinforcement made of a metal material.

The plate-shaped head part 3 is arranged at one end of the base body 2 and projects radially from the base body 2. The radius of the head part 3 is larger than the radius of the base body 2. On the lateral surface of the base body 2, rib-shaped struts 5 run axially to its longitudinal axis in the direction of the head part 3. The struts 5 can increase the rigidity of the base body 2. Furthermore, curved latching hooks 6 extend from the lateral surface of the base body 2 in the direction of the head part 3, i.e. radially away from the longitudinal axis of the base body 2. The latching hooks 6 have a latching shoulder 7 at their free end, which is formed by a recess, whereby the latching shoulder 7 lies in a plane that is aligned transversely to the longitudinal axis. Apertures are provided in the plate-shaped head part 3 above the latching hooks 6, through which, for example, disassembly tools can be guided. In the illustrated version of the fastening element 1, the fastening element 1 has four latching hooks 6, which are evenly spaced apart on the base body 2.

The sleeve 4 is enclosed by the base body 2 and extends coaxially to the central axis of the base body 2 through the base body 2 like a tube. A first and a second opening 8, 9 are present at axially opposite ends of the sleeve 4. The contour of the openings 8, 9 can be different or the same. In the illustrated embodiment, the second opening 9 is rectangular, while the first opening 8 is circular.

Guide elements 10 may be present on the inner surface of the sleeve 4, which extend axially at least in sections over the length of the sleeve 4. Furthermore, radially resilient locking fingers 11 are provided on the inner surface of the sleeve 4, the free ends of which protrude into the sleeve 4. The locking fingers 11 are fixed near the first opening 8 and extend axially in the direction of the second opening 9, their free ends extending radially towards the central axis of the sleeve 4 and forming a locking head 12. There is a gap 13 between the locking finger 11 and the inner surface of the sleeve 4. The locking head 12 can have a locking surface that is aligned radially to the longitudinal axis, i.e. the center axis of the sleeve 4, and has a concave shape that points in the direction of the center axis. However, it is also possible for the locking head 12 to have a stepped design with several locking surfaces. The locking surface is used for locking with another locking surface. In this respect, it is advantageous if the locking surface of the locking finger 11 protrudes in the direction of the center axis. The locking surface can have a coating to increase the frictional forces or is designed from a corresponding advantageous material.

In one embodiment, the locking fingers 11 are designed in such a way that they have a greater restoring torque than the latching hooks 6. This means that the tendency of the locking fingers 11 to return to their rest position is greater than that of the latching hooks 6. This can be achieved, for example, by a geometric design of the locking fingers 11 or the latching hooks 6 or by the choice of their material. In the sleeve 4, for example, two locking fingers 11 arranged diametrically to each other or three or four evenly spaced locking fingers 11 can be arranged.

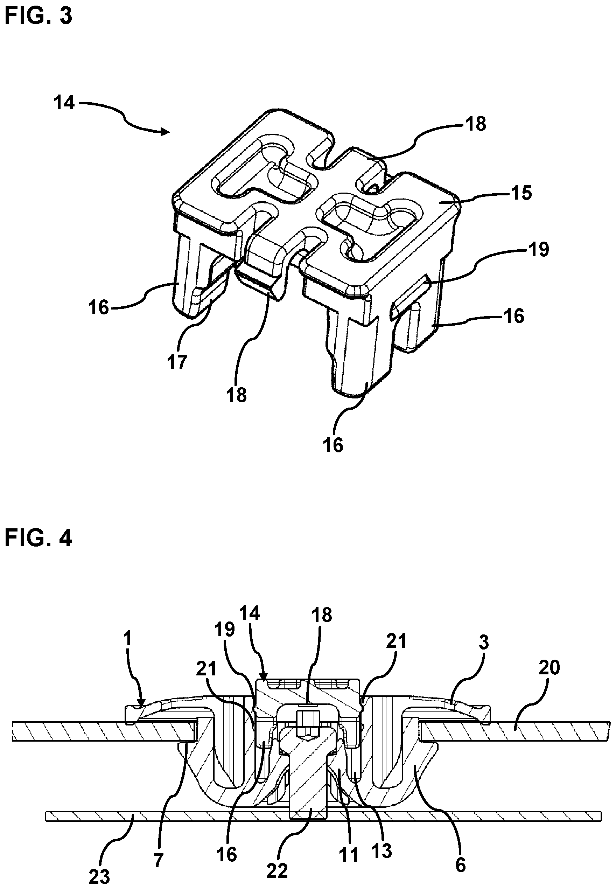

The fastening element 1 further comprises a locking element 14, which is shown in figure 2 in the state in which it is received in the sleeve 4 and in figure 3 alone. The locking element 14 has a plate-like basic shape 15, from which locking arms 16 extend vertically in one direction. In the illustrated embodiment, the locking arms 16 are arranged at the four corners of the plate-shaped base 15. Axial recesses 17, which form an end-shaped step, are provided at the free ends of the locking arms 16. On two sides of the plate-shaped base form 15, latching elements 18 protrude from the base form 15. The latching elements 18 are arranged diametrically to each other and latch downwards and outwards. On two further opposite sides of the plate-shaped base 15, the locking element 14 has bead-shaped elevations 19, which are arranged axially spaced from the latching elements 18, i.e. lie in a plane below the latching elements 18.

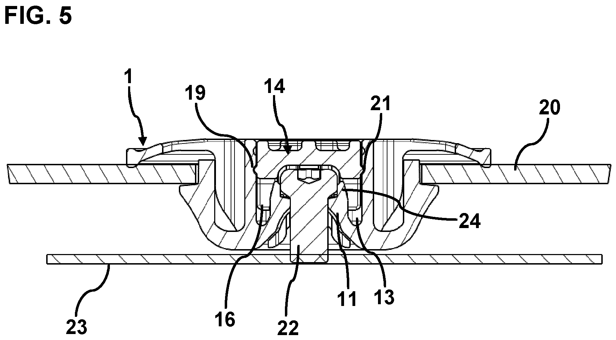

Figures 4 and 5 show a perspective configuration of a fastening arrangement 20, with figure 4 illustrating the first locking position and figure 5 the second locking position. A significant advantage of the fastening element 1 is its low height and compact design, which is clearly visible in figures 4 and 5. The fastening arrangement comprises the fastening element 1 described above and a first vehicle body component 20 attached thereto. The structural component 20 may be a component of a vehicle, such as, but not limited to, a sheet metal, an insulation panel, a control unit, an add-on part, a trim part, a cable harness guide, a vehicle floor panel, etc. In the embodiment shown, the first vehicle body component 20 is illustrated for simplicity as a panel 20, which is identified by the reference sign of the first vehicle body component 20. The fastening element 1 can preferably be inserted into a hole or recess in the plate 20, with the latching hooks 6 of the plate-shaped head part 3 latching behind the plate 20. The plate-shaped head part 3 remains on one side of the plate 20, with the base body 2 protruding through the plate 20.

The locking element 14 is inserted into the sleeve 4 and is in its first locking position, in which the beads 19 of the locking element 14 are in engagement with first radial recesses 21 of the sleeve 4. There are at least two axially spaced radial recesses 21 in the inner surface of the sleeve 4. In the embodiment, at least four radial recesses 21 are present, with two being present on opposite sides of the inner surface of the sleeve 4 and another two being arranged axially spaced apart from the first two radial recesses 21. The radial recesses 21 can be designed as slots on opposite sides of the inner surface of the sleeve 4 or as a circumferential notch. If the radial recesses 21 are designed as notches, the number of radial recesses 21 is reduced accordingly.

The radial recesses 21 and the beads 19 are advantageously arranged on corresponding surfaces of the locking element 14 and the sleeve 4, so that engagement is possible. Because the locking element 14 or its beads 19 are in engagement with the radial recesses 21, the locking element 14 cannot be lost during transportation or assembly. The latching elements 18 arranged on the locking element 14 are not yet in engagement with the sleeve 4 in the first locking position, i.e. they are still above the plate-shaped head part 3, which can be clearly seen in figure 4.

In the embodiment, the fastening element 1 is already pressed onto a bolt-like structure. For the purposes of the invention, this structure is referred to as stud 22. This is an element that is attached to or is a component of the second vehicle body component 23. The stud 22 can have a ball-like head with latching surfaces at its sides. The second vehicle body component 23 may also be a structural component of a vehicle, such as, but not limited to, a vehicle floor, a floor panel, etc. For the sake of simplicity, it is also illustrated in the figure as a plate 23.

The fastening element 1, or more precisely the fastening arrangement, is pressed axially onto the stud 22 with the first opening 8 of the sleeve 4, so that the spherical stud head can be received at least in sections by the sleeve 4. The inner contour of the sleeve 4 can be formed with a shape corresponding to the spherical stud 22, which can improve the form fit. It is preferable for the sleeve 4 to have at least partly a circular cross-section, which makes it possible to compensate for assembly tolerances. The spherical stud 22 of the second vehicle body component 23 and the sleeve 4 can be designed to match each other. The achievable fastening forces can be influenced, for example, by the size of the spherical section, the axial length of the overlap area and/or the sleeve material. Depending on the design, this can generate static or dynamic fastening forces.

Due to the axial movement of the stud 22 into the sleeve 4, the locking fingers 11 projecting into the sleeve 4 slide over the head of the stud 22 and are spread apart - more precisely, the locking fingers 11 slide with their locking heads 12 over the ball-like head of the stud 22 into its latching position, in which the locking surface of the stud 22 engages with that of the locking finger 11. The guide elements 10 provided in the sleeve 4 can support the movement of the stud 22 and center the stud 22.

The latching hooks 6, which hold the first vehicle body component 20, advantageously compensate for any positional tolerances of several studs 22 relative to one another. This is possible because the locking element 14 is still in the first locking position. Due to the axial recesses 17 at the ends of the locking arms 16, the locking fingers 11, or more precisely their free ends, have a certain amount of play and can move slightly. The same applies to any disassembly aids 24 provided on the locking fingers 11, which can also still move to a certain extent. Such disassembly aids 24 are accessible to a disassembly tool that can be inserted into the sleeve 4 and enable the locking fingers 11 to be disengaged.

The preferred design of the locking fingers 11, namely that the restoring torque of the locking fingers 11 is greater than the restoring torque of the latching hooks 6, advantageously ensures that the locking fingers 11 are always positioned centrally on the stud 22 and the position tolerance of the second vehicle body component 23 is compensated for by the latching hooks 6.

After the locking fingers 11 have engaged behind the head of the stud 22, the locking fingers 11 are engaged with their locking surface with locking surfaces of the stud 22 and are consequently latched. Next, the locking element 14 is moved by an axial movement relative to the sleeve 4 into its second locking position, in which the locking arms 16 engage in the gap 13 and the locking fingers 11 are substantially clamped between the stud 22 and the locking arms 16. This arrangement of the locking fingers 11 between stud 22 and locking arm 16 means that radial and preferably axial movement of the locking fingers 11 is no longer possible. This makes it considerably more difficult for the fastening element to peel off the stud 22. Furthermore, the bead 19 of the locking element 14 moves out of the first radial recess 21 into the second radial recess 21, which is axially spaced from the first. In the second locking position, the latching elements 18 arranged on the locking element 14 also engage behind a shoulder present in the sleeve 4. The locking element 14 is securely locked and at the same time blocks any radial movements of the locking fingers 11 that could lead to the disengagement with the stud 22. The force to be applied for unintentional disassembly is considerably increased by the preferred design of the fastening element 1 or the fastening arrangement compared to the known fastening means.

The fastening element 1 also has the ability to test the acoustic properties during installation. For this purpose, it can be advantageous to acoustically separate components of the fastening arrangement. It is therefore possible to monitor the correct latching of the fastening element 1 using a sound monitoring system known from the prior art.

To disassemble the fastening arrangement, the locking element can be removed using a disassembly tool and the other latches can also be released using a disassembly tool. The fastening element 1 can be reused and reassembled without further modifications.

## Claims

1. Fastening element (1) for fastening a first vehicle body component (20) to a second vehicle body component (23), having:
- a locking element (14) comprising locking arms (16), and
- a base body (2) which comprises
a plate-shaped head part (3) with latching hooks (6) projecting in the direction of the head part (3) adapted for latching to the first vehicle body component (20), and with
a sleeve (4) which is present in the center of the base body (2) and which comprises a first opening (8) adapted to be a receptacle for a stud (22) arranged on the second vehicle body component (23) and a second opening (9) adapted to receive the locking element (14), the sleeve (4) having radially resilient locking fingers (11) projecting into the sleeve (4) and which are designed to form a form-fitting connection with the stud (22),
wherein the locking element (14) can be brought by an axial movement relative to the sleeve (4) into a first locking position, in which it is held in a form-fitting manner in the sleeve (4) and in which the locking arms are located at a distance from the locking fingers (11),
wherein the locking element (14) can be moved by a further axial movement relative to the sleeve (4) into a second locking position, in which it is held in the sleeve (4) in a form-fitting manner and in which the locking arms (16) are in effective contact with the locking fingers (11), so that the locking fingers (11) can be clamped between the stud (22) and locking arms (16).

2. Fastening element (1) according to claim 1, **characterized in that** at least a first and a second radial recess (21) axially spaced from the sleeve (4) are present on the inner surface of the sleeve (4).

3. Fastening element (1) according to claim 2, **characterized in that** the locking element (14) has at least one bead (19) on its outer surface, which bead (19) is engaged with the first radial recess (21) in the first locking position and with the second radial recess (21) in the second locking position.

4. Fastening element (1) according to one of the preceding claims, **characterized in that** two latching elements (18), which are arranged diametrically to one another and have a radially resilient design, are present on an outer surface of the locking element (14) and, in the second locking position, engage behind a shoulder present in the sleeve (4).

5. Fastening element (1) according to one of the preceding claims, **characterized in that** the locking fingers (11) have at their free ends a locking head (12) with a concave locking surface aligned radially to the central axis of the sleeve (4).

6. Fastening element (1) according to one of the preceding claims, **characterized in that** the locking fingers (11) project from the inner circumferential surface of the sleeve (4) axially to the longitudinal axis of the sleeve (4) in the direction of the second opening (9).

7. Fastening element (1) according to one of the preceding claims, **characterized in that** a gap (13) open in the direction of the first opening (8) extends between the locking finger (11) and the inner circumferential surface of the sleeve (4), into which gap (13) the locking arms (16) of the locking element (14) project in the second locking position.

8. Fastening element (1) according to one of the preceding claims, **characterized in that** the locking fingers (11) are designed in such a way that they have a greater restoring torque than the latching hooks (6).

9. Fastening element (1) according to claim 5, **characterized in that** disassembly aids (24) are present on the locking head (12) of the locking fingers (11), which are accessible by a disassembly tool which can be guided into the sleeve (4), so that a locking finger (11) can be moved out of its latching engagement with the stud (22) by the applicatiaon of force to the disassembly aid.

10. Fastening element (1) according to one of the preceding claims, **characterized in that** the locking arms (16) rest against the locking fingers (11) with a contact surface in the second locking position and the contact surface is formed by an axial recess (17) on the locking arms (16).

11. Fastening element (1) according to one of the preceding claims, **characterized in that** the latching hooks (6) extend radially outwards from a lateral surface of the base body (2) with respect to the longitudinal axis of the sleeve (4) and in an arcuate manner in the direction of the plate-shaped head part (3).

12. Fastening element (1) according to one of the preceding claims, **characterized in that** the latching hooks (6) comprise at their free end a latching shoulder (7) pointing outwards, towards the edge of the plate-shaped head part (3).

13. Fastening arrangement having a fastening element (1) according to one of the preceding claims 1 to 12 and having a first vehicle body component (20) which can be connected to a second vehicle body component (23), the first vehicle body component (20) being latched with latching hooks (6) of the fastening element (1), and wherein a locking element (14) which can be brought into the sleeve (4) in an axial movement is in its first locking position in positive engagement with the sleeve (4) and its locking arms (16) are arranged at a distance from the locking fingers (11).

14. Fastening arrangement according to claim 13, **characterized in that** a stud (22) is arranged on the second vehicle body component (23), which stud locks with the locking fingers (11) projecting into the sleeve (4) and having a radially resilient design.

15. Fastening arrangement according to claim 14, **characterized in that** the locking element (14) is form-fittingly held in the sleeve (4) in its second locking position and the locking arms (16) are in operative contact with the locking fingers (11), so that the locking fingers (11) are clamped between stud (22) and locking arms (16).
